# EUROPÄISCHE PATENTSCHRIFT

(11) **EP 3 458 201 B1**
(45) Veröffentlichungstag und Bekanntmachung des Hinweises auf die Patenterteilung: **14.04.2021**
(21) Anmeldenummer: 17720798.2
(22) Anmeldetag: 03.05.2017
(51) Int. Cl.: B05B 14/00, B05B 14/40, F04B 15/02, F04B 49/20, B05B 9/04, B05B 12/12, F04B 49/06

(54) **BESCHICHTUNGSMITTELPUMPE**
COATING AGENT PUMP
POMPE À AGENT DE REVÊTEMENT

(30) Priorität: 17.05.2016 DE 102016005945
(43) Veröffentlichungstag der Anmeldung: 27.03.2019
(73) Patentinhaber: Dürr Systems AG, 74321 Bietigheim-Bissingen (DE)
(72) Erfinder: KAUFMANN, Robin, 75365 Calw-Stammheim (DE); CARLS, Alexander, 71083 Herrenberg (DE)
(74) Vertreter: v. Bezold & Partner Patentanwälte - PartG mbB
(86) Internationale Anmeldenummer: PCT/EP2017/060456
(87) Internationale Veröffentlichungsnummer: WO 2017/198458

(56) Entgegenhaltungen:
- EP-A2- 1 754 891
- WO-A2-2013/036937
- DE-A1-102010 003 218
- DE-A1-102013 018 606
- US-B2- 7 938 632

## Beschreibung

Die Erfindung betrifft eine Beschichtungsmittelpumpe zur Förderung eines Beschichtungsmittels in einer Beschichtungsanlage, insbesondere zum Fördern von Lack oder Dickstoffen in einer Lackieranlage.

In modernen Lackieranlagen zur Lackierung von Bauteilen (z.B. Kraftfahrzeugkarosseriebauteilen) werden zur Förderung des zu lackierenden Lacks in der Regel Kolbenpumpen eingesetzt, die pneumatisch oder elektromotorisch angetrieben werden, wobei eine elektromotorisch angetriebene Doppelkolbenpumpe zur Lackförderung beispielsweise aus US 7 938 632 B2 bekannt ist. Als Antriebsmotor werden hierbei üblicherweise Asynchronmotoren eingesetzt.

Die bekannten Lackpumpen haben jedoch verschiedene Nachteile, die nachfolgend kurz erläutert werden.

So haben die eingangs kurz erwähnten druckluftbetriebenen Kolbenpumpen einen hohen Energieverbrauch, was mit entsprechend hohen Betriebskosten verbunden ist.

Auch bei elektromotorisch angetriebenen Kolbenpumpen mit Asynchronmotoren als Antriebsmotoren ist der Energieverbrauch relativ hoch, was insbesondere im unteren Drehzahlbereich gilt. Darüber hinaus können die Drehzahlen von Asynchronmotoren nicht beliebig klein sein, da es sonst zur Überhitzung durch hohe Anlaufströme kommt.

Weiterhin zeigt der geförderte Lackstrom bei derartigen Kolbenpumpen eine relativ hohe Pulsation, da die Pulsation des geförderten Lackstroms von der Güte des mechanischen Umlenksystems oder von der Geschwindigkeit der Drehrichtungsumkehr des Antriebsmotors bestimmt wird.

Darüber hinaus sind bei den bekannten elektromotorisch angetriebenen Kolbenpumpen weitere Mess- und Sicherheitseinrichtungen erforderlich, um Überdrucksituationen zu vermeiden. Hierzu müssen stromabwärts hinter der Kolbenpumpe in der Regel ein Drucksensor und/oder ein Überdruckschalter angeordnet sein.

Ein weiterer Nachteil der bekannten Kolbenpumpen besteht darin, dass zur Konstanthaltung des Lackdrucks im Leitungssystem weitere Messeinrichtungen (z.B. Drucksensoren) erforderlich sind mit Hilfe derer ein Regelkreis aufgebaut werden kann.

Weiterhin ist zu erwähnen, dass zur Verwendung als Dosierpumpe in der Regel nur Kolbenpumpen mit einem kleinen Hubvolumen geeignet sind, wohingegen Kolbenpumpen mit einem großen Hubvolumen nicht die erforderliche Dosiergenauigkeit haben.

Schließlich wäre es wünschenswert, bei derartigen Kolbenpumpen rechtzeitig einen Pumpendefekt zu erkennen, der beispielsweise verschleißbedingt sein kann.

Zum Stand der Technik ist auch hinzuweisen auf DE 602 10 287 T2, DE 41 30 295 A1, US 7 938 632 B2 und WO 2008/138848 A2.

Zum allgemeinen technischen Hintergrund der Erfindung ist auch hinzuweisen auf EP 1 754 891 A2, DE 10 2010 003218 A1, und DE 10 2013 018606 A1.

Schließlich offenbart WO 2013/036937 A2 eine Beschichtungsmittelpumpe gemäß dem Oberbegriff von Anspruch 1. Diese bekannte Beschichtungsmittelpumpe arbeitet jedoch noch nicht vollständig befriedigend.

Der Erfindung liegt deshalb die Aufgabe zugrunde, eine entsprechend verbesserte Beschichtungsmittelpumpe zu schaffen.

Diese Aufgabe wird durch eine erfindungsgemäße Beschichtungsmittelpumpe gemäß dem Hauptanspruch gelöst.

Die erfindungsgemäße Beschichtungsmittelpumpe umfasst zunächst in Übereinstimmung mit dem Stand der Technik einen elektrischen Antriebsmotor zum Antrieb der Beschichtungsmittelpumpe. Hierbei ist zu erwähnen, dass die Beschichtungsmittelpumpe im Betrieb laufend ihre Pumpenstellung ändert. Bei einer technischen Realisierung als Kolbenpumpe bedeutet dies, dass sich die Kolbenstellung der Kolbenpumpe im Betrieb kontinuierlich ändert, da der oder die Kolben oszillierend hinund hergeht.

Die erfindungsgemäße Beschichtungsmittelpumpe zeichnet sich durch ein Wegmesssystem und optional ein Drehmoment- oder Kraftmesssystem aus, das es ermöglicht, die aktuelle Pumpenstellung der Beschichtungsmittelpumpe quantitativ zu erfassen und einer Kraft auf den Kolben bzw. einem Drehmoment auf die Welle zuzuordnen. Bei einer Kolbenpumpe wird also von dem Wegmesssystem die Kolbenstellung(-en) erfasst.

Hierbei ist zu erwähnen, dass ein Unterschied besteht zwischen der erfindungsgemäßen quantitativen Bestimmung der Pumpenstellung einerseits und der bekannten qualitativen Bestimmung der Pumpenstellung andererseits. So ist es beispielsweise aus dem Stand der Technik bekannt, bei einer Kolbenpumpe die Endanschlagpunkte der Kolbenbewegung durch magnetisch betätigte Reed-Schalter zu erfassen. Hierbei wird jedoch nur qualitativ ermittelt, ob die Endanschlagspunkte der Kolbenbewegung erreicht sind oder nicht.

Die erfindungsgemäße quantitative Erfassung der Pumpenstellung bietet verschiedene Vorteile, die später noch eingehend erläutert werden.

Beispielsweise kann das Wegmesssystem in die Beschichtungsmittelpumpe integriert sein. Hierzu kann der elektrische Antriebsmotor beispielsweise als Servomotor ausgebildet sein, der als Bestandteil des Wegmesssystems einen integrierten Positionssensor aufweist, um die Stellung des Antriebsmotors und damit auch die Pumpenstellung zu ermitteln. Es besteht jedoch alternativ auch die Möglichkeit, dass ein separater Drehwertgeber vorgesehen ist, der mit dem Antriebsmotor verbunden ist und damit die Winkelstellung der Antriebswelle und damit auch die Pumpenstellung erfasst.

Alternativ besteht jedoch auch die Möglichkeit, dass das Wegmesssystem baulich von der Beschichtungsmittelpumpe getrennt ist.

Weiterhin ist zu erwähnen, dass das Wegmesssystem vorzugsweise einen Absolutwert der Pumpenstellung ermittelt im Gegensatz zu einem inkrementellen Wert der Pumpenstellung.

Ein solches Wegmesssystem mit einem Absolutwert als Ausgangssignal ist vorzugsweise in der Lage, alle Stellungen des Umlenksystems zwischen Antriebsmotor und Kolben innerhalb einer Umdrehung der entsprechenden Umdrehung des Antriebsmotors zuzuordnen oder die Position der mit den Kolben verbundenen Schlitten auf den Schienen zu messen. Die initiale Zuordnung kann entweder durch entsprechende Vorgabe des Benutzers über ein Eingabesystem erfolgen oder wie im Falle der Verwendung von inkrementellen Wegmesssystemen über sogenannte Lernfahrten. Dabei wird über einige Umdrehungen hinweg Lack bei niedriger und konstanter Drehzahl (aus Sicherheitsgründen) gefördert. Hierbei kommt es in den Umkehrpunkten der Kolben zu Druckschwankungen auf der Leitung, wodurch sich auch die auf die Kolben wirkenden Kräfte verändern. Diese Kräfteveränderung breitet sich über das Umlenksystem auf die Welle des Antriebsmotors aus. Durch das Wegmesssystem (Kraftmesssystem oder Drehmomentmesssystem) wird die Kraftveränderung gemessen. Damit wird die Zuordnung eines Wegpunkts zum Punkt der Pulsation und damit zum Umkehrpunkt des Kolbens ermöglicht. Ist der Umkehrpunkt bekannt, so sind wiederrum alle weiteren Stellungen des Umlenksystems und damit auch des Kolbens bekannt, da das Verhältnis aus Winkel des Umlenksystems und Position des Wegmesssystems bei der Auslegung bestimmt wird. Das Drehmoment kann hierbei wahlweise über eine Strommessung innerhalb des Antriebsmotors oder über Drehmomentwellen an der Welle des Antriebsmotors oder über Dehnmessstreifen erfolgen. Alternativ kann eine Kraftmessung durch Dehnmessstreifen an dem bzw. den Kolben erfolgen.

Hierbei ist zu erwähnen, dass das Drehmoment-/Kraftmesssystem hängt nicht zwangsläufig mit dem Wegmesssystem zusammenhängt. Ein Encoder dient z.B. zum Messen der Position, die Stromerfassung dient dagegen zur Berechnung des Drehmoments.

Es besteht jedoch alternativ auch die Möglichkeit, dass das Wegmesssystem lediglich einen inkrementellen Wert der Pumpenstellung bzw. der Winkelstellung der Antriebswelle des Antriebsmotors ermittelt.

In einem bevorzugten Ausführungsbeispiel der Erfindung handelt es sich bei dem Antriebsmotor um einen Synchronmotor. Es ist jedoch zu erwähnen, dass die Erfindung grundsätzlich auch mit anderen Typen von Elektromotoren realisierbar ist, so dass der Schutzbereich nicht auf eine Beschichtungsmittelpumpe mit einem Synchronmotor als Antriebsmotor beschränkt ist.

Es wurde bereits vorstehend erwähnt, dass das Wegmesssystem die Pumpenstellung der Beschichtungsmittelpumpe quantitativ erfasst. Die Erfindung berücksichtigt hierzu die technischphysikalische Erkenntnis, dass die mechanische Belastung des Antriebsmotors während eines Pumpenzyklus entsprechend zyklisch schwankt. So treten beispielsweise bei einer Kolbenpumpe in den Umkehrpunkten (Totpunkten) der Kolben Druckschwankungen auf, die mit einer entsprechenden Schwankung der mechanischen Belastung des Antriebsmotors verbunden sind. Die Umkehrpunkte des Kolbens lassen sich deshalb durch eine Überwachung der mechanischen Belastung des Antriebsmotors erkennen. In dem bevorzugten Ausführungsbeispiel der Erfindung leitet das Wegmesssystem die Pumpenstellung deshalb aus der mechanischen Belastung des Antriebsmotors ab.

Die mechanische Belastung des Antriebsmotors kann im Rahmen der Erfindung auf verschiedene Arten ermittelt werden.

Beispielsweise kann das Wegmesssystem mittels eines Antriebsreglers eine oder mehrere elektrische Betriebsgrößen (z. B. Betriebsstrom) des elektrischen Antriebsmotors messen und daraus die mechanische Belastung ableiten. So lässt sich das Antriebsmoment eines Elektromotors in der Regel aus dem Betriebsstrom berechnen.

Eine andere Möglichkeit zur Bestimmung der mechanischen Belastung des Antriebsmotors besteht darin, einen zusätzlichen Drehmomentaufnehmer vorzusehen, der das Drehmoment misst, das an der Antriebswelle des Antriebsmotors wirkt. Beispielsweise kann ein solcher Drehmomentaufnehmer einen Dehnungsmessstreifen (DMS) sein, der an der Antriebswelle des Antriebsmotors oder an einem Kolben der Beschichtungsmittelpumpe angebracht ist, wobei der Dehnungsmessstreifen am Kolben nicht das Drehmoment misst, sondern die Kraft auf den Kolben.

Die beiden vorstehend genannten Arten der Bestimmung der mechanischen Belastung des Antriebsmotors können allein oder in Kombination miteinander eingesetzt werden. Darüber hinaus können im Rahmen der Erfindung auch andere Verfahren eingesetzt werden, um die mechanische Belastung des Antriebsmotors der Beschichtungsmittelpumpe zu ermitteln.

Das erfindungsgemäße Wegmesssystem ermöglicht eine genaue Zuordnung von Kolbenposition zu Motorposition, was eine sehr hohe Dosiergenauigkeit erlaubt. So kann die Dosierungenauigkeit bei einem Hubvolumen der Kolben von 1600 cm³ beispielsweise kleiner als 1 ml sein. Die relative Dosierungenauigkeit kann also kleiner sein als 5 ‰, 2 ‰, 1 ‰ oder 0,75 ‰, bezogen auf das Hubvolumen der Kolbenpumpe.

Weiterhin ist zu erwähnen, dass die erfindungsgemäße Beschichtungsmittelpumpe vorzugsweise eine Steuereinheit aufweist, die eingangsseitig mit dem Wegmesssystem und ausgangsseitig mit dem elektrischen Antriebsmotor verbunden ist. Ausgangsseitig steuert die Steuereinheit den elektrischen Antriebsmotor an. Eingangsseitig erhält die Steuereinheit von dem Wegmesssystem den aktuellen Wert der Pumpenstellung, was eine extrem genaue Dosierung des Beschichtungsmittels ermöglicht.

Die Rückmeldung der aktuellen Pumpenstellung ermöglicht es bei einer Kolbenpumpe auch, dass die Kolbengeschwindigkeit gezielt variiert wird, um die störende Pulsation des geförderten Lackstroms zu verringern. Die Steuereinheit steuert den Antriebsmotors deshalb vorzugsweise so, dass sich der Kolben beim Durchlaufen seiner Umkehrpunkte schneller bewegt als zwischen den Umkehrpunkten. Dadurch kann die störende Pulsation der Beschichtungsmittelpumpe im Vergleich zu einer Kolbenbewegung mit konstanter Geschwindigkeit um einen Faktor 7 verringert werden. Dies ermöglicht oftmals einen Verzicht der ansonsten erforderlichen Pulsationsdämpfer im Fluidkreis.

Darüber hinaus weist die erfindungsgemäße Beschichtungsmittelpumpe vorzugsweise eine Druckmesseinrichtung auf, um den Beschichtungsmitteldruck am Ausgang der Beschichtungsmittelpumpe zu messen. Hierzu ermittelt die Druckmesseinrichtung zunächst die mechanische Belastung, die von der Beschichtungsmittelpumpe auf den Antriebsmotor wirkt. Insbesondere kann die Druckmesseinrichtung hierzu eine elektrische Betriebsgröße (z. B. Betriebsstrom) des elektrischen Antriebsmotors auswerten. Aus der so ermittelten mechanischen Belastung des Antriebsmotors kann die Druckmesseinrichtung dann den Beschichtungsmitteldruck ableiten. Diese Druckmessung kann unter Umständen einen Verzicht auf zusätzliche Drucksensoren ermöglichen. Drüber hinaus können auf diese Weise Druckschwankungen schneller ausgeglichen werden, die beispielsweise entstehen, wenn Beschichtungsmittel an Entnahmestelle plötzlich entnommen wird. Die Messung des Beschichtungsmitteldrucks durch eine Messung der elektrischen Betriebsgrößen an dem Antriebsmotor ist auch deutlich schneller als die Erfassung externer Sensorsignale über Analog- oder Digitalwandler, was eine schnellere Reaktion ermöglicht.

Ferner umfasst die erfindungsgemäße Beschichtungsmittelpumpe vorzugsweise ein Überwachungssystem, um eine Fehlfunktion oder einen Verschleiß der Beschichtungsmittelpumpe zu erkennen. So stehen die verschiedenen Messgrößen, wie beispielsweise Beschichtungsmitteldruck, Förderleistung und Drehmoment des Antriebsmotors, üblicherweise in einer bestimmten Beziehung zueinander. Falls die tatsächlichen Messwerte von Beschichtungsmitteldruck, Förderleistung und Drehmoment nun von dieser vorgegebenen Beziehung abweichen, so kann dies auf eine Fehlfunktion oder einen Verschleiß des Systems hindeuten. Das Überwachungssystem ermittelt deshalb im Betrieb die Beziehungen zwischen Messgrößen der Pumpenstellen, des Beschichtungsmitteldrucks, der mechanischen Belastung des Antriebsmotors und/oder der Förderleistung der Beschichtungsmittelpumpe. Bei einer zeitlichen Änderung dieser Beziehungen zwischen den einzelnen Messgrößen kann das Überwachungssystem dann ein Warnsignal ausgeben, das dann auch zu einer entsprechenden automatischen Reaktion führen kann. Beispielsweise kann dieses Warnsignal an die Steuereinheit ausgegeben werden, die dann den Pumpenbetrieb beendet.

Auch zeitlich wiederkehrende Drehmomentschwankungen können so als Informationsquelle genutzt werden, um Fehler des Systems auch schon frühzeitig zu erkennen. So können beispielsweise ungleiche Abnutzung des Umlenksystems, Späne oder Verunreinigungen auf dem Schienensystem oder beschädigte Zähne des Getriebes die Ursache für ein solches Fehlerbild sein.

Auch der Trockenlauf der Beschichtungsmittelpumpe, der zu einem sehr schnellen Verschleiß der Dichtungen der Beschichtungsmittelpumpe führt, da diese durch den Lack geschmiert werden, kann erkannt werden, wenn eine Drehzahl >0 einem sehr niedrigen Drehmoment oder einer sehr niedrigen auf den Kolben wirkenden Kraft entgegensteht (es wird dann "nur" Luft gepumpt, die keinen Gegendruck und damit keine Kraft erzeugt).

Weiterhin umfasst die erfindungsgemäße Beschichtungsmittelpumpe vorzugsweise einen Druckbegrenzer zur Begrenzung des Drucks am Ausgang der Beschichtungsmittelpumpe. Der Druckbegrenzer begrenzt hierbei vorzugsweise eine elektrische Betriebsgröße der Beschichtungsmittelpumpe, um eine Drucküberschreitung zu verhindern. Der Druckbegrenzer begrenzt den Beschichtungsmitteldruck also hierbei mittelbar, indem eine elektrische Betriebsgröße begrenzt wird. Hierbei wird das über den Betriebsstrom oder mittels Dehnungsmessstreifen (DMS) ermittelte Drehmoment begrenzt und damit durch die Beziehung zwischen Druck und Drehmoment/Kraft mittelbar der Lackdruck begrenzt.

In dem bevorzugten Ausführungsbeispiel der Erfindung handelt es sich bei der Beschichtungsmittelpumpe um eine Doppelkolbenpumpe mit zwei gegenläufigen Kolben, die jeweils in einem Zylinder verschiebbar sind. Eine derartige Doppelkolbenpumpe ist beispielsweise aus US 7 938 632 B2 bekannt und muss deshalb nicht näher beschrieben werden. Vorzugsweise sind die Kolben hierbei horizontal verschiebbar, während der Antriebsmotor eine senkrecht ausgerichtete Antriebswelle aufweist, die zwischen den beiden Kolben verläuft. Der Antriebsmotor wirkt hierbei vorzugsweise über eine drehbare Kurvenscheibe auf die beiden Kolben. Weiterhin ist zu erwähnen, dass zwischen dem Antriebsmotor und der Kurvenscheibe vorzugsweise ein Planetengetriebe angeordnet ist. Der Antriebsmotor und die Elektronikkomponenten sind hierbei vorzugsweise in einem explosionsgeschützten Gehäuse untergebracht.

Schließlich beansprucht die Erfindung auch Schutz für eine komplette Beschichtungsanlage mit einer erfindungsgemäßen Beschichtungsmittelpumpe, wie vorstehend beschrieben wurde.

Die Vorteile der Erfindung lassen sich wie folgt zusammenfassen:
- Deutlich verringerte Pulsation gegenüber vergleichbaren Pumpensystemen,
- Hochpräzise Dosierung und hohe Förderleistung mit der gleichen Pumpe möglich,
- Schutz der Pumpe bzw. der Dichtungen vor Trockenlauf,
- Druckregelung/-überwachung ohne zusätzliche Sensorik,
- Hoher Wirkungsgrad und niedriger Energieverbrauch, insbesondere bei niedrigen Drehzahlen (wenn ein Synchronservomotor eingesetzt wird),
- Präventive Defekt-/Verschleißerkennung,
- Überdruckbegrenzung ohne zusätzliche Sensorik, und
- Automatische Erkennung der Kolbenposition durch Umkehrpunkterkennung.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine schematische Darstellung einer erfindungsgemäßen Beschichtungsanlage,
- Figur 2: eine Perspektivansicht der Beschichtungsmittelpumpe aus Figur 1,
- Figur 3: eine aufgeschnittene Perspektivansicht des Oberteils der Beschichtungsmittelpumpe aus Figur 2, sowie
- Figur 4: eine Querschnittsansicht des Unterteils der Beschichtungsmittelpumpe aus Figur 2.

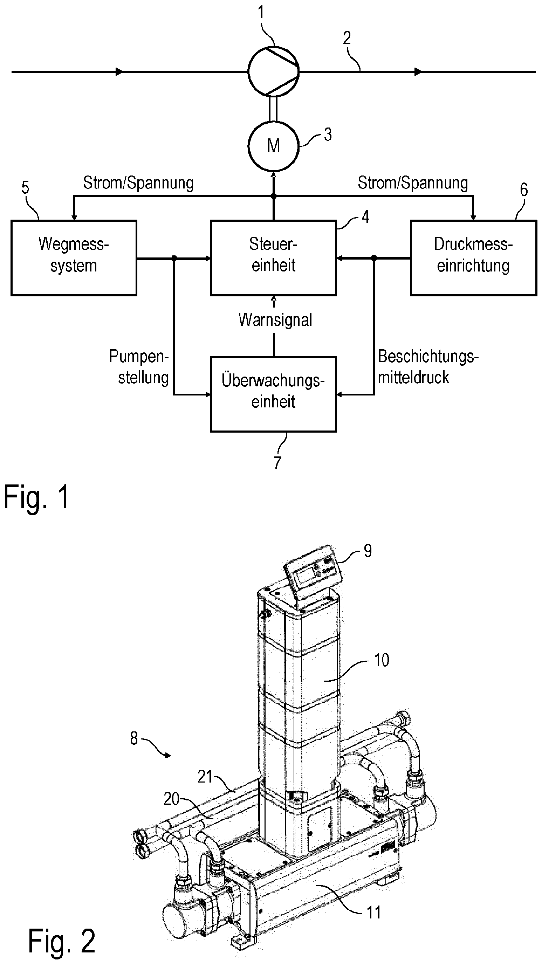

Figur 1 zeigt eine vereinfachte schematische Darstellung einer erfindungsgemäßen Beschichtungsmittelpumpenanordnung mit einer Doppelkolbenpumpe 1, die in einer Beschichtungsmittelleitung 2 angeordnet ist und Lack in Pfeilrichtung durch die Beschichtungsmittelleitung 2 pumpt.

Die Doppelkolbenpumpe 1 wird von einem elektrischen Antriebsmotor 3 angetrieben, wobei der Antriebsmotor 3 von einer Steuereinheit 4 elektrisch angesteuert wird. Die Steuereinheit 4 gibt hierbei elektrische Betriebsgrößen des Antriebsmotors 3 vor und definiert dadurch auch das Drehmoment, mit dem der Antriebsmotor 3 die Doppelkolbenpumpe 1 antreibt.

Hierbei ist zusätzlich ein Wegmesssystem 5 vorgesehen, das die elektrischen Betriebsgrößen des Antriebsmotors 3 laufend erfasst, um daraus die Pumpenstellung zu ermitteln. So kommt es in den Umkehrpunkten der Kolben zu Druckschwankungen, wodurch sich die auf die Kolben wirkenden Kräfte verändern. Diese Kräfteveränderung wirkt sich dann auch auf die Antriebswelle des Antriebsmotors 3 und auf die elektrischen Betriebsgrößen des Antriebsmotors 3 aus. Das Wegmesssystem 5 kann deshalb durch eine Auswertung der elektrischen Betriebsgrößen des Antriebsmotors 3 die Winkelstellung der Antriebswelle des Antriebsmotors 3 und damit auch die Pumpenstellung ermitteln.

Das Wegmesssystem 5 meldet den aktuellen Wert der Pumpenstellung dann an die Steuereinheit 4 zurück, was es der Steuereinheit 4 ermöglicht, den Antriebsmotor 3 exakt anzusteuern, was eine sehr hohe Dosiergenauigkeit erlaubt.

Darüber hinaus weist die Erfindung eine Druckmesseinrichtung 6 auf, die ebenfalls die elektrischen Betriebsgrößen des Antriebsmotors 3 überwacht, um daraus den Beschichtungsmitteldruck stromabwärts hinter der Doppelkolbenpumpe 1 abzuleiten. Hierbei wird die Tatsache ausgenutzt, dass der Zusammenhang zwischen Drehmoment und Beschichtungsmitteldruck und damit auch der Zusammenhang zwischen den gemessenen elektrischen Betriebsgrößen und dem Beschichtungsmitteldruck im Betrieb konstant ist, wenn man von verschleißbedingten Änderungen absieht. Die Druckmesseinrichtung 6 meldet diesen Druckwert dann auch an die Steuereinheit 4 zurück, damit die Steuereinheit 4 den Druckwert bei der Ansteuerung des Antriebsmotors 3 berücksichtigen kann.

Schließlich ist noch eine Überwachungseinheit 7 vorgesehen, die eine Fehlfunktion oder einen übermäßigen Verschleiß erkennt. Hierbei wird die Tatsache ausgenutzt, dass die im Betrieb auftretenden Werte des Beschichtungsmitteldrucks, der Förderleistung und des Drehmoments und damit auch der elektrischen Betriebsgrößen normalerweise in einem bestimmten Verhältnis zueinander stehen. Falls nun eine Fehlfunktion auftritt oder ein übermäßiger Verschleiß, so ändert sich das Verhältnis zwischen diesen Größen im Laufe der Zeit. Die Überwachungseinheit 7 erfasst deshalb den Beschichtungsmitteldruck und die Pumpenstellung und überprüft, ob die gemessenen Wert in einem normalen Verhältnis zueinander stehen, das eine korrekte Pumpenfunktion anzeigt. Falls dies nicht der Fall sein sollte, so nimmt die Überwachungseinheit 7 eine Fehlfunktion oder einen Verschleiß an und überträgt ein Warnsignal an die Steuereinheit 4, die dann geeignete Gegenmaßnahmen einleiten kann.

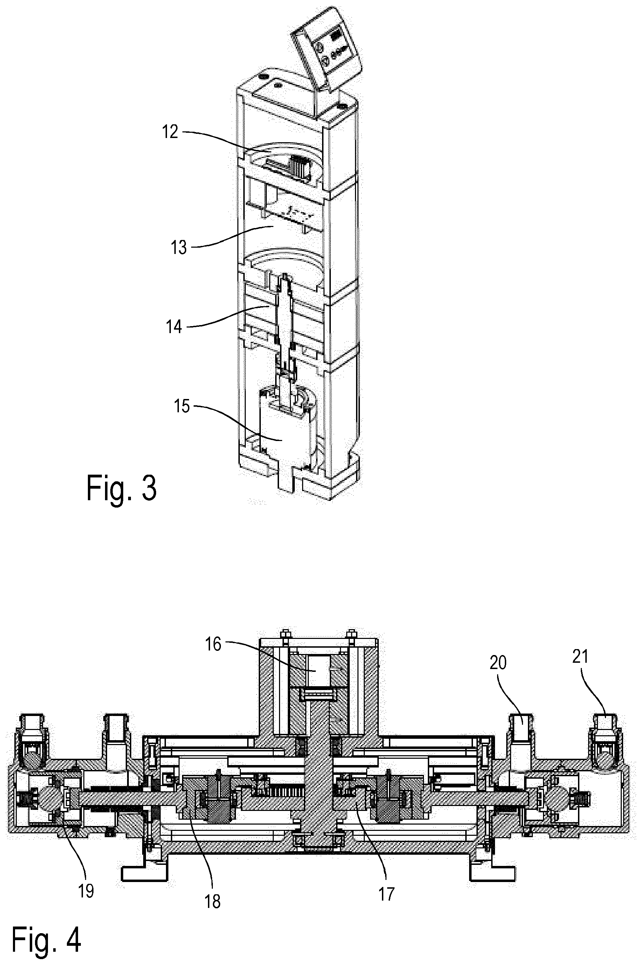

Die Figuren 2 bis 4 zeigen verschiedene Ansichten einer erfindungsgemäßen Doppelkolbenpumpe 8 mit einem explosionsgeschützten Bediengerät 9, einem explosionsgeschützten Antriebsstrang 10 und einem unteren Fluidteil 11.

In dem explosionsgeschützten Antriebsstrang 10 befinden sich ein Klemmkasten 12, ein Antriebsregler 13, ein Synchronservomotor 14 mit einem integrierten Drehwinkelgeber und ein Planetengetriebe 15.

Die Winkelstellung des Synchronservomotors 14 wird hierbei also direkt durch den integrierten Drehwinkelgeber ermittelt.

An der Oberseite des Fluidteils 11 befindet sich zunächst eine Kupplung 16, die es ermöglicht, den explosionsgeschützten Antriebsstrang 10 mit einer Kurvenscheibe 17 zu verbinden. Die Kurvenscheibe 17 wirkt auf Schlitten 18 in dem Fluidteil 11, wobei die Schlitten 18 wiederum Kolben 19 antreiben. Der zu fördernde Lack wird hierbei über einen Materialeinlass 20 zugeführt und über einen Materialauslass 21 abgeleitet.

### Bezugszeichenliste

- 1: Doppelkolbenpumpe
- 2: Beschichtungsmittelleitung
- 3: Antriebsmotor
- 4: Steuereinheit
- 5: Wegmesssystem
- 6: Druckmesseinrichtung
- 7: Überwachungseinheit
- 8: Doppelkolbenpumpe
- 9: Explosionsgeschütztes Bediengerät
- 10: Explosionsgeschützter Antriebsstrang
- 11: Fluidteil
- 12: Klemmkasten
- 13: Antriebsregler
- 14: Synchronservomotor mit Drehwinkelgeber
- 15: Planetengetriebe
- 16: Kupplung
- 20: Materialeinlass
- 21: Materialauslass
- 17: Kurvenscheibe
- 18: Schlitten
- 19: Kolben
- 20: Materialeinlass
- 21: Materialauslass

## Patentansprüche

1. Beschichtungsmittelpumpe (1; 8) zur Förderung eines Beschichtungsmittels in einer Beschichtungsanlage, insbesondere zum Fördern von Lack in einer Lackieranlage, mit
a) einem elektrischen Antriebsmotor (3; 14) zum Antrieb der Beschichtungsmittelpumpe (1; 8), so dass die Beschichtungsmittelpumpe (1; 8) ihre Pumpenstellung im Betrieb kontinuierlich ändert,
b) wobei die Beschichtungsmittelpumpe (1; 8) eine Kolbenpumpe ist mit mindestens einem Kolben (19), der in einem Zylinder verschiebbar ist und von dem Antriebsmotor (3; 14) angetrieben wird, und mit
c) einem Wegmesssystem (5) zum quantitativen Erfassen der Pumpenstellung der Beschichtungsmittelpumpe (1; 8),
c1) wobei das Wegmesssystem (5) mittels einer Kraft- oder Drehmomentmesseinrichtung die mechanische Belastung des Antriebsmotors (3; 14) durch die Beschichtungsmittelpumpe (1; 8) ermittelt, und
c2) wobei das Wegmesssystem (5) aus der mechanischen Belastung des Antriebsmotors (3; 14) die Pumpenstellung ableitet,
**dadurch gekennzeichnet,**
d) **dass** das Wegmesssystem (5) aufgrund einer Pulsation am Umkehrpunkt der Kolben die Pumpenstellung ableitet.

2. Beschichtungsmittelpumpe (1; 8) nach Anspruch 1,
**dadurch gekennzeichnet,**
a) **dass** das Wegmesssystem (5) in die Beschichtungsmittelpumpe (1; 8) integriert ist, oder
b) **dass** das Wegmesssystem (5) von der Beschichtungsmittelpumpe (1; 8) getrennt ist.

3. Beschichtungsmittelpumpe (1; 8) nach einem der vorhergehenden Ansprüche, **dadurch gekennzeichnet,**
a) **dass** das Wegmesssystem (5) einen Absolutwert der Pumpenstellung ermittelt im Gegensatz zu einem inkrementellen Wert, oder
b) **dass** das Wegmesssystem (5) einen inkrementellen Wert der Pumpenstellung ermittelt im Gegensatz zu einem Absolutwert.

4. Beschichtungsmittelpumpe (1; 8) nach einem der vorhergehenden Ansprüche, **dadurch gekennzeichnet,**
a) **dass** der Antriebsmotor (3; 14) ein Synchronmotor oder ein Asynchronmotor ist, und/oder
b) **dass** der Antriebsmotor (14) ein Servomotor ist, der als Bestandteil des Wegmesssystems (5) einen integrierten Positionssensor aufweist, um die Stellung des Antriebsmotors (3; 14) und damit auch die Pumpenstellung zu ermitteln, oder
c) **dass** eine Position eines Schlittens gemessen wird, der angetrieben wird.

5. Beschichtungsmittelpumpe (1; 8) nach einem der vorhergehenden Ansprüche,
**dadurch gekennzeichnet,**
a) **dass** das Wegmesssystem (5) mittels einer Kraft- oder Drehmomentmesseinrichtung, insbesondere mittels eines Antriebsreglers, eine elektrische Betriebsgröße des elektrischen Antriebsmotors (3; 14) misst, insbesondere einen Betriebsstrom, und
b) **dass** das Wegmesssystem (5) aus der gemessenen elektrischen Betriebsgröße die mechanische Belastung des Antriebsmotors (3; 14) durch die Beschichtungsmittelpumpe (1; 8) ableitet.

6. Beschichtungsmittelpumpe (1; 8) nach einem der vorhergehenden Ansprüche,
**dadurch gekennzeichnet,**
a) **dass** das die Kraft- oder Drehmomentmesseinrichtung einen Drehmomentaufnehmer aufweist, der ein Drehmoment misst, das an einer Antriebswelle des Antriebsmotors (3; 14) wirkt, und/oder
b) **dass** der Drehmomentaufnehmer einen Dehnungsmesstreifen aufweist, der an der Antriebswelle des Antriebsmotors (3; 14) oder an einem Kolben (19) der Beschichtungsmittelpumpe (1; 8) angebracht ist.

7. Beschichtungsmittelpumpe (1; 8) nach einem der vorhergehenden Ansprüche, **dadurch gekennzeichnet,**
a) **dass** die Beschichtungsmittelpumpe (1; 8) bezogen auf einen Hubraum der Kolbenpumpe von 1600cm³ eine absolute Dosierungenauigkeit von weniger als 50 ml, 25 ml, 10 ml, 5 ml, 2 ml oder 1 ml aufweist, und/oder
b) **dass** die Beschichtungsmittelpumpe (1; 8) eine Kolbenpumpe mit einem bestimmten Hubvolumen ist, wobei die Beschichtungsmittelpumpe (1; 8) bezogen auf das Hubvolumen eine relative Dosierungenauigkeit von weniger als 5‰, 2‰, 1‰, oder 0,75‰ aufweist.

8. Beschichtungsmittelpumpe (1; 8) nach einem der vorhergehenden Ansprüche, **dadurch gekennzeichnet,**
a) **dass** eine Steuereinheit (4) vorgesehen ist, die eingangsseitig mit dem Wegmesssystem (5) und ausgangsseitig mit dem elektrischen Antriebsmotor (3; 14) verbunden ist, und
b) **dass** die Steuereinheit (4) den elektrischen Antriebsmotor (3; 14) in Abhängigkeit von der von dem Wegmesssystem (5) ermittelten Pumpenstellung ansteuert.

9. Beschichtungsmittelpumpe (1; 8) nach Anspruch 8,
**dadurch gekennzeichnet, dass** die Steuereinheit (4) den Antriebsmotor (3; 14) zur Verringerung von Pulsationen des Förderstroms so ansteuert, dass der Kolben sich beim Durchlaufen seiner Umkehrbereiche schneller bewegt als zwischen den Umkehrbereichen.

10. Beschichtungsmittelpumpe (1; 8) nach einem der vorhergehenden Ansprüche, **dadurch gekennzeichnet,**
a) **dass** eine Druckmesseinrichtung (6) vorgesehen ist, um den Beschichtungsmitteldruck am Ausgang der Beschichtungsmittelpumpe (1; 8) zu messen, und
b) **dass** die Druckmesseinrichtung (6) die mechanische Belastung ermittelt, die von der Beschichtungsmittelpumpe (1; 8) auf den Antriebsmotor (3; 14) wirkt, insbesondere durch eine Auswertung einer elektrischen Betriebsgröße des elektrische Antriebsmotors (3; 14), und
c) **dass** die Druckmesseinrichtung (6) aus der mechanischen Belastung des Antriebsmotors (3; 14) den Beschichtungsmitteldruck ableitet.

11. Beschichtungsmittelpumpe (1; 8) nach einem der vorhergehenden Ansprüche, **dadurch gekennzeichnet,**
a) **dass** ein Überwachungssystem (7) vorgesehen ist, um eine Fehlfunktion oder einen Verschleiß der Beschichtungsmittelpumpe (1; 8) zu erkennen, und
b) **dass** das Überwachungssystem (7) Beziehungen zwischen Messgrößen der Pumpenstellung, des Beschichtungsmitteldrucks, der mechanische Belastung des Antriebsmotors (3; 14) und/oder der Förderleistung der Beschichtungsmittelpumpe (1; 8) ermittelt, und
c) **dass** das Überwachungssystem (7) bei einer zeitlichen Änderung der Beziehungen zwischen den Messgrößen ein Warnsignal erzeugt.

12. Beschichtungsmittelpumpe (1; 8) nach einem der vorhergehenden Ansprüche, **dadurch gekennzeichnet,**
a) **dass** ein Druckbegrenzer vorgesehen ist zur Begrenzung des Drucks am Ausgang der Beschichtungsmittelpumpe (1; 8), und
b) **dass** der Druckbegrenzer eine elektrische Betriebsgröße der Beschichtungsmittelpumpe (1; 8) begrenzt, um eine Drucküberschreitung zu verhindern.

13. Beschichtungsmittelpumpe (1; 8) nach einem der vorhergehenden Ansprüche, **dadurch gekennzeichnet,**
a) **dass** die Beschichtungsmittelpumpe (1; 8) eine Doppelkolbenpumpe ist mit zwei gegenläufigen Kolben (19), die in jeweils einem Zylinder verschiebbar sind, und/oder
b) **dass** die Kolben (19) horizontal verschiebbar sind und der Antriebsmotor (3; 14) eine senkrechte Antriebswelle zwischen den beiden Kolben (19) aufweist, und/oder
c) **dass** der Antriebsmotor (3; 14) die beiden Kolben (19) über eine drehbare Kurvenscheibe (17) antreibt, und/oder
d) **dass** zwischen dem Antriebsmotor (3; 14) und der Kurvenscheibe (17) ein Planetengetriebe angeordnet ist, und/oder
e) **dass** der Antriebsmotor (3; 14) und/oder Elektronikkomponenten (13) in einem explosionsgeschützten Gehäuse (10) untergebracht sind.

14. Beschichtungsanlage zur Beschichtung von Bauteilen, insbesondere Lackieranlage zur Lackierung von Kraftfahrzeugkarosseriebauteilen, mit
a) mindestens einem Applikator zur Applikation des Beschichtungsmittels auf die Bauteile,
b) einem Beschichtungsmittelbehälter zur Bereitstellung des zu applizierenden Beschichtungsmittels,
c) einer Beschichtungsmittelpumpe (1; 8) nach einem der vorhergehenden Ansprüche zur Förderung des Beschichtungsmittels aus dem Beschichtungsmittelbehälter zu dem Applikator,
d) vorzugsweise einer Rückführleitung zur Rückführung von überschüssigem Beschichtungsmittel in den Beschichtungsmittelbehälter.

## Claims

1. Coating agent pump (1; 8) for conveying a coating agent in a coating installation, in particular for conveying paint in a painting installation, having
a) an electric drive motor (3; 14) for driving the coating agent pump (1; 8) so that the coating agent pump (1; 8) continuously changes its pump position during operation,
b) wherein the coating agent pump (1; 8) is a piston pump with at least one piston (19) which is displaceable in a cylinder and is driven by the drive motor (3; 14), and with
c) a position measuring system (5) for quantitatively detecting the pump position of the coating agent pump (1; 8),
c1) wherein the position measuring system (5) ascertains the mechanical loading of the drive motor (3; 14) by the coating agent pump (1; 8) by means of a force or torque measurement means, and
c2) wherein the position measuring system (5) derives the pump position from the mechanical loading of the drive motor (3; 14),
**characterised in**
d) **that** the position measuring system (5) derives the pump position on the basis of a pulsation at the reversal point of the pistons.

2. Coating agent pump (1; 8) according to Claim 1, **characterised in that**
a) the position measuring system (5) is integrated in the coating agent pump (1; 8), or
b) the position measuring system (5) is separated from the coating agent pump (1; 8).

3. Coating agent pump (1; 8) according to one of the preceding claims, **characterised in that**
a) the position measuring system (5) ascertains an absolute value of the pump position in contrast to an incremental value, or
b) the position measuring system (5) ascertains an incremental value of the pump position in contrast to an absolute value.

4. Coating agent pump (1; 8) according to one of the preceding claims, **characterised in that**
a) the drive motor (3; 14) is a synchronous motor or an asynchronous motor, and/or
b) the drive motor (14) is a servomotor which has an integrated position sensor as part of the position measuring system (5) in order to ascertain the position of the drive motor (3; 14) and hence also the pump position, or
c) a position of a slide which is driven is measured.

5. Coating agent pump (1; 8) according to any of the preceding claims, **characterised in that**
a) the position measuring system (5) measures an electrical operating variable of the electric drive motor (3; 14), in particular an operating current, by means of a force or torque measurement means, in particular by means of a drive controller, and
b) the position measuring system (5) derives from the measured electrical operating variable the mechanical loading of the drive motor (3; 14) by the coating agent pump (1; 8).

6. Coating agent pump (1; 8) according to any of the preceding claims,
**characterised in that**
a) the force or torque measurement means has a torque transducer which measures a torque which acts on a drive shaft of the drive motor (3; 14), and/or
b) the torque transducer has a strain gauge which is attached to the drive shaft of the drive motor (3; 14) or to a piston (19) of the coating agent pump (1; 8).

7. Coating agent pump (1; 8) according to one of the preceding claims, **characterised in that**
a) the coating agent pump (1; 8) has an absolute dispensing inaccuracy of less than 50 ml, 25 ml, 10 ml, 5 ml, 2 ml or 1 ml, relative to a swept volume of the piston pump of 1600 cm³, and/or
b) the coating agent pump (1; 8) is a piston pump with a certain displaced volume, the coating agent pump (1; 8) having a relative dispensing inaccuracy of less than 5‰, 2‰, 1‰ or 0.75‰ relative to the displaced volume.

8. Coating agent pump (1; 8) according to one of the preceding claims, **characterised in that**
a) a control unit (4) is provided which is connected on the input side to the position measuring system (5) and on the output side to the electric drive motor (3; 14), and
b) the control unit (4) actuates the electric drive motor (3; 14) as a function of the pump position ascertained by the position measuring system (5).

9. Coating agent pump (1; 8) according to Claim 8, **characterised in that** the control unit (4) drives the drive motor (3; 14) in order to reduce pulsations of the delivery flow such that the piston when passing through its reversal regions moves faster than between the reversal regions.

10. Coating agent pump (1; 8) according to one of the preceding claims, **characterised in that**
a) a pressure measurement means (6) is provided in order to measure the coating agent pressure at the exit from the coating agent pump (1; 8), and
b) the pressure measurement means (6) ascertains the mechanical loading which acts on the drive motor (3; 14) from the coating agent pump (1; 8), in particular by evaluation of an electrical operating variable of the electric drive motor (3; 14), and
c) the pressure measurement means (6) derives the coating agent pressure from the mechanical loading of the drive motor (3; 14).

11. Coating agent pump (1; 8) according to one of the preceding claims, **characterised in that**
a) a monitoring system (7) is provided in order to recognise a malfunction or wear of the coating agent pump (1; 8), and
b) the monitoring system (7) ascertains relationships between measured variables of the pump position, of the coating agent pressure, of the mechanical loading of the drive motor (3; 14) and/or of the delivery rate of the coating agent pump (1; 8), and
c) the monitoring system (7) generates a warning signal in the event of a change in the relationships between the measured variables over time.

12. Coating agent pump (1; 8) according to one of the preceding claims, **characterised in that**
a) a pressure limiter is provided for limiting the pressure at the exit from the coating agent pump (1; 8), and
b) the pressure limiter limits an electrical operating variable of the coating agent pump (1; 8) in order to prevent excessive pressure.

13. Coating agent pump (1; 8) according to one of the preceding claims, **characterised in that**
a) the coating agent pump (1; 8) is a double-piston pump with two opposed pistons (19) which are displaceable in one cylinder in each case, and/or
b) the pistons (19) are horizontally displaceable and the drive motor (3; 14) has a vertical drive shaft between the two pistons (19), and/or
c) the drive motor (3; 14) drives the two pistons (19) by means of a rotatable cam disc (17), and/or
d) a planetary gear mechanism is arranged between the drive motor (3; 14) and the cam disc (17), and/or
e) the drive motor (3; 14) and/or electronics components (13) are housed in an explosion-protected housing (10).

14. Coating installation for coating components, in particular painting installation for painting motor-vehicle body components, with
a) at least one applicator for applying the coating agent to the components,
b) a coating agent container for making available the coating agent which is to be applied,
c) a coating agent pump (1; 8) according to one of the preceding claims for conveying the coating agent out of the coating agent container to the applicator,
d) preferably a return line for returning excess coating agent into the coating agent container.

## Revendications

1. Pompe à produit de revêtement (1 ; 8) pour le refoulement d'un produit de revêtement dans une installation de revêtement, plus particulièrement pour le refoulement d'une peinture dans une installation de peinture, avec
a) un moteur d'entraînement électrique (3 ; 14) pour l'entraînement de la pompe à produit de revêtement (1 ; 8), de façon à ce que la pompe à produit de revêtement (1 ; 8) change continuellement de position de pompe lors du fonctionnement,
b) dans laquelle la pompe à produit de revêtement (1 ; 8) est une pompe à pistons avec au moins un piston (19), qui coulisse dans un cylindre, et qui est entraîné par le moteur d'entraînement (3 ; 14) et avec
c) un système de mesure de déplacement (5) pour la mesure quantitative de la position de la pompe à produit de revêtement (1 ; 8),
c1) dans laquelle le système de mesure de déplacement (5) détermine, au moyen d'un dispositif de mesure de force ou de couple, la sollicitation mécanique du moteur d'entraînement (3 ; 14) par la pompe à produit de revêtement (1 ; 8) et
c2) dans laquelle le système de mesure de déplacement (5) déduit la position de la pompe de la sollicitation mécanique du moteur d'entraînement (3 ; 14),
**caractérisée en ce que**
d) le système de mesure de déplacement (5) déduit la position de la pompe sur la base d'une pulsation au niveau du point de rebroussement des pistons.

2. Pompe à produit de revêtement (1 ; 8) selon la revendication 1,
**caractérisée en ce que**
a) le système de mesure de déplacement (5) est intégré dans la pompe à produit de revêtement (1 ; 8) ou
b) le système de mesure de déplacement (5) est séparé de la pompe à produit de revêtement (1 ; 8).

3. Pompe à produit de revêtement (1 ; 8) selon l'une des revendications précédentes, **caractérisée en ce que**
a) le système de mesure de déplacement (5) détermine une valeur absolue de la position de la pompe au lieu d'une valeur incrémentale ou
b) le système de mesure de déplacement (5) détermine une valeur incrémentale de la position de la pompe au lieu d'une valeur absolue.

4. Pompe à produit de revêtement (1 ; 8) selon l'une des revendications précédentes, **caractérisée en ce que**
a) le moteur d'entraînement (3 ; 14) est un moteur synchrone ou un moteur asynchrone et/ou
b) le moteur d'entraînement (14) est un servomoteur qui comprend, en tant que partie intégrante du système de mesure de déplacement (5), un capteur de position intégré, afin de déterminer la position du moteur d'entraînement (3 ; 14) et donc également la position de la pompe ou
c) une position d'un chariot, qui est entraîné, est mesurée.

5. Pompe à produit de revêtement (1 ; 8) selon l'une des revendications précédentes
**caractérisée en ce que**
a) le système de mesure de déplacement (5) mesure, au moyen d'un dispositif de mesure de force ou de couple, plus particulièrement au moyen d'un régulateur d'entraînement, une grandeur de fonctionnement électrique du moteur d'entraînement électrique (3 ; 14), plus particulièrement un courant de fonctionnement et
b) le système de mesure de déplacement (5) déduit de la grandeur de fonctionnement électrique mesurée la sollicitation mécanique du moteur d'entraînement (3 ; 14) par la pompe à produit de revêtement (1 ; 8).

6. Pompe à produit de revêtement (1 ; 8) selon l'une des revendications précédentes
**caractérisée en ce que**
a) le dispositif de mesure de force ou de couple comprend un capteur de couple qui mesure un couple qui agit au niveau d'un arbre d'entraînement du moteur d'entraînement (3 ; 14) et/ou
b) le capteur de couple comprend une jauge de contrainte qui est montée sur l'arbre d'entraînement du moteur d'entraînement (3 ; 14) ou sur un piston (19) de la pompe à produit de revêtement (1 ; 8).

7. Pompe à produit de revêtement (1 ; 8) selon l'une des revendications précédentes, **caractérisée en ce que**
a) la pompe à produit de revêtement (1 ; 8) présente, par rapport à une cylindrée de la pompe à piston de 1600 cm³, une précision de dosage inférieure à 50 ml, 25 ml, 10 ml, 5 ml, 2 ml ou 1 ml et/ou
b) la pompe à produit de revêtement (1 ; 8) est une pompe à pistons avec une cylindrée déterminée, dans laquelle la pompe à produit de revêtement (1 ; 8) présente, par rapport à la cylindrée, une précision de dosage inférieure à 5 ‰, 2 ‰, 1 ‰ ou 0,75 %o.

8. Pompe à produit de revêtement (1 ; 8) selon l'une des revendications précédentes, **caractérisée en ce que**
a) une unité de commande (4) est prévue, qui est reliée, côté entrée, avec le système de mesure de déplacement (5) et, côté sortie, avec le moteur d'entraînement électrique (3 ; 14) et
b) l'unité de commande (4) contrôle le moteur d'entraînement électrique (3 ; 14) en fonction de la position de la pompe déterminée par le système de mesure de déplacement (5).

9. Pompe à produit de revêtement (1 ; 8) selon la revendication 8, **caractérisée en ce que** l'unité de commande (4) contrôle le moteur d'entraînement (3 ; 14) pour la réduction des pulsations du flux de refoulement, de façon à ce que le piston se déplace, lors de la traversée de ses zones de rebroussement, plus rapidement qu'entre les zones de rebroussement.

10. Pompe à produit de revêtement (1 ; 8) selon l'une des revendications précédentes, **caractérisée en ce que**
a) un dispositif de mesure de pression (6) est prévu, afin de mesurer la pression de produit de revêtement à la sortie de la pompe à produit de revêtement (1 ; 8) et
b) le dispositif de mesure de pression (6) détermine la sollicitation mécanique qui est exercée par la pompe à produit de revêtement (1 ; 8) sur le moteur d'entraînement (3 ; 14), plus particulièrement par une analyse de la grandeur de fonctionnement électrique du moteur d'entraînement électrique (3 ; 14) et
c) le dispositif de mesure de pression (6) déduit la pression du produit de revêtement de la sollicitation mécanique du moteur d'entraînement (3 ; 14).

11. Pompe à produit de revêtement (1 ; 8) selon l'une des revendications précédentes, **caractérisée en ce que**
a) un système de surveillance (7) est prévu afin de détecter un dysfonctionnement ou une usure de la pompe à produit de revêtement (1 ; 8) et
b) le système de surveillance (7) détermine des relations entre les grandeurs de mesure de la position de la pompe, de la pression du produit de revêtement, de la sollicitation mécanique du moteur d'entraînement (3 ; 14) et/ou de la puissance de refoulement de la pompe à produit de revêtement (1 ; 8) et
c) le système de surveillance (7) génère, lors d'une variation dans le temps des relations entre les grandeurs de mesure, un signal d'avertissement.

12. Pompe à produit de revêtement (1 ; 8) selon l'une des revendications précédentes, **caractérisée en ce que**
a) un limiteur de pression est prévu pour limiter la pression à la sortie de la pompe à produit de revêtement (1 ; 8) et
a) le limiteur de pression limite une grandeur de fonctionnement électrique de la pompe à produit de revêtement (1 ; 8) afin d'empêcher un dépassement de la pression.

13. Pompe à produit de revêtement (1 ; 8) selon l'une des revendications précédentes, **caractérisée en ce que**
a) la pompe à produit de revêtement (1 ; 8) est une pompe à double piston avec deux pistons contrarotatifs (19) qui coulissent chacun dans un cylindre et/ou
b) les pistons (19) coulissent horizontalement et le moteur d'entraînement (3 ; 14) comprend un arbre d'entraînement vertical entre les deux pistons (19) et/ou
c) le moteur d'entraînement (3 ; 14) entraîne les deux pistons (19) par l'intermédiaire d'une came rotative (17) et/ou
d) entre le moteur d'entraînement (3 ; 14) et la came (17), est disposé un engrenage épicycloïdal et/ou
e) le moteur d'entraînement (3 ; 14) et/ou les composants électroniques (13) sont logés dans un boîtier antidéflagrant (10).

14. Installation de revêtement pour le revêtement de pièces, plus particulièrement une installation de peinture pour la peinture de pièces de carrosseries de véhicules automobiles avec
a) au moins un applicateur pour l'application du produit de revêtement sur les pièces,
b) un récipient de produit de revêtement pour la mise à disposition du produit de revêtement à appliquer,
c) une pompe à produit de revêtement (1 ; 8) selon l'une des revendications précédentes, pour le refoulement du produit de revêtement du récipient de produit de revêtement vers l'applicateur,
d) de préférence une conduite de retour pour le retour du produit de revêtement en excès vers le récipient de produit à revêtement.
